# EUROPEAN PATENT APPLICATION

(11) **EP 4 823 142 A1**
(43) Date of publication of application: **14.10.2026**
(21) Application number: 26170945.5
(22) Date of filing: 07.04.2026
(51) Int. Cl.: H04W 12/122, H04L 9/40, G06N 3/0455, G06N 3/088

(54) **A SYSTEM AND A METHOD FOR PROVIDING A DEFENSE IN UNTRUSTED O-RAN ARCHITECTURE**

(30) Priority: 08.04.2025 IL 32017725
(71) Applicant: Deutsche Telekom AG, 53113 Bonn (DE)
(72) Inventor: AIZIKOVICH, Eran, 7685810 Mazkeret Batya (IL); MIMRAN, David, 6215505 Tel Aviv (IL); SHABTAI, Asaf, 7684200 Hulda (IL); ELOVICI, Yuval, 7986400 Arugot (IL); LEHMANN, Heiko, 12587 Berlin (DE)
(74) Representative: Schmidt, Christian

(57) **Abstract**

An Al-based method for detecting adversarial cell telemetry vulnerabilities in real time resulting from O-RAN's openness and multi-operator untrusted structure, comprising the steps of: extracting relevant time-series features from the reporting cells and UEs Key Performance Indicators (KPIs); training a dedicated AE model for each cell; generating new enriched feature vectors that capture contextual information from both each specific cell and the entire network using compressed latent space from each AE model, concatenated with the aggregated latent spaces from all other cells; training an additional AE for each cell using the new enriched feature vectors, thereby reconstructing the original features; training a classifier to compare the output of the second model to the input of the first model; and if the loss between the input and output exceeds a predefined threshold, classifying the input as untrusted, otherwise classifying the input as trusted.

## Description

### Field of the Invention

The present invention relates to the field of cybersecurity. More particularly, the present invention relates to a method for improving the security and reliability of O-RAN systems by identifying vulnerabilities and applying effective countermeasures for mitigating attacks exploiting these vulnerabilities.

### Background for the Invention

Radio Access Network (RAN) architectures [14, 19] provide wireless connectivity to mobile devices and acts as the final link between the cellular network and User Equipment (UE - any device used directly by an end-user to communicate over a cellular network, such as smartphones, tablets, laptops, or loT devices). Traditionally, RANs have been vendor-specific, i.e., with hardware interfaces and applications optimized for a specific vendor's equipment, and were operated by a single owner. While this approach enables vendors to deliver integrated and highly optimized solutions, it also has significant drawbacks. Traditional RANs require vendors to develop all components, driving up costs for network operators and creating vendor lock-in, which limits flexibility. To overcome these drawbacks, an advanced architecture Open Radio Access Network (O-RAN) [46] has been developed. O-RAN allows open accessible shared information to promote multi-vendor deployments, with standardized interfaces between RAN components [26, 36]; Adaptivity is obtained in real-time by using cloud-based and virtualized components managed through Software-Defined Networking (SDN - a networking architecture that separates the control plane (decision-making) from the data plane (packet forwarding), allowing for centralized management via software. By using a centralized controller, it provides automated control, enhanced security, and improved flexibility, overcoming the rigid, manual configurations of traditional hardware-based networking), which enables more flexibility and reduces operational costs [28, 58]; and adaption of the RAN Intelligent Component (RIC - a software-defined component of the O-RAN architecture responsible for controlling and optimizing RAN functions), which is responsible for utilizing artificial intelligence (AI) and machine learning (ML) systems, to reduce human intervention [41, 44].

The shift to multi-operators in RAN architectures introduces new security challenges. Traditional RANs, where a single operator oversees the entire network, were considered fully trusted. However, multi-operator networks in O-RAN architecture resulted in an untrusted environment since different operators manage various network elements [29, 54].

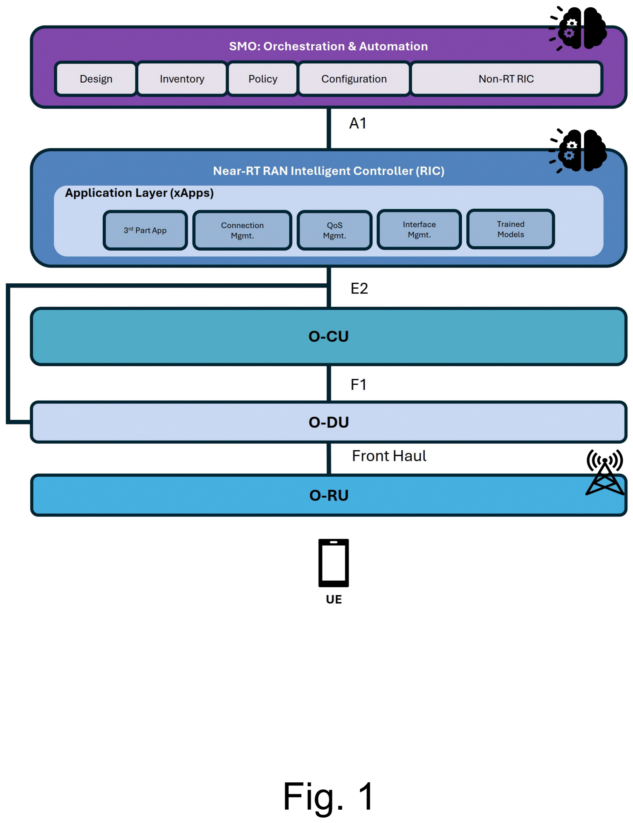

The O-RAN architecture's components and their open interfaces are illustrated in Fig. 1. The RAN Intelligent Controllers (RIC) is a key element in the O-RAN architecture, introducing programmable components capable of executing optimization and intelligent routines with closed-loop control. RICs often leverage Artificial Intelligence (AI) and Machine Learning (ML) models for various tasks like network slicing, handovers, and scheduling policies. By doing so, RICs significantly enhance network efficiency and performance optimization. The main key benefits of RICs include Improved network performance and efficiency through AI and ML-driven optimization [10]; Increased flexibility and programmability of the RAN [16]; Reduced operational costs through automation and intelligent resource management [28]; Improved UE experience through more granular and intelligent control of network resources [49]. The RIC as described in the O-RAN specifications consists of two primary levels: the near-real-time RIC (near-RT RIC) and the non-real-time RIC (non-RT RIC) [4, 5].

The Near RT RIC acts as the near-real-time decision-making core of the network. It operates with control loop periodicities ranging from 10 milliseconds to 1 second, enabling it to manage dynamic adjustments within the network in near real-time. Designed to oversee multiple RAN nodes (DUs or CUs), the near-RT RIC can influence the Quality of Service (QoS) for hundreds or even thousands of UE connections. The near-RT RIC hosts specialized applications known as xApps, which perform essential tasks such as RAN data analysis, traffic steering, and network control. These xApps communicate with the RAN via the E2 interface (a key open interface in 5G O-RAN architectures that connects the Near-RT RIC to O-RAN nodes), receiving real-time data and sending control commands back to adjust network behavior. Additionally, the near-RT RIC provides APIs and services to support the automated lifecycle management of xApps, including onboarding, deployment, and termination. These capabilities ensure seamless internal messaging, conflict mitigation and operational stability across the network [4].

The non-RT RIC is responsible for longer term (operating on timescales greater than one second) network optimization and policy management to support the near-RT RIC via the A1 interface (this interface interconnects a new logical "Non-RealTime RAN Intelligent Controller (Non-RT-RIC)" function in the Service Management & Orchestration (SMO) layer with a new logical "Near-RealTime RAN Intelligent Controller (near-RT-RIC)" function in the RAN.), such as the threshold for UE reallocation, in the TS xApp. It hosts applications called rApps, which can handle tasks such as network slicing, energy saving, and Al/ML model training [5].

### Untrusted Scenarios in O-RAN

While multi-vendor environments primarily raise supply chain security concerns, multi-operator deployments introduce continuous operational trust considerations, as service providers must rely on infrastructure and network elements controlled by other entities throughout the network's operational lifecycle [54].

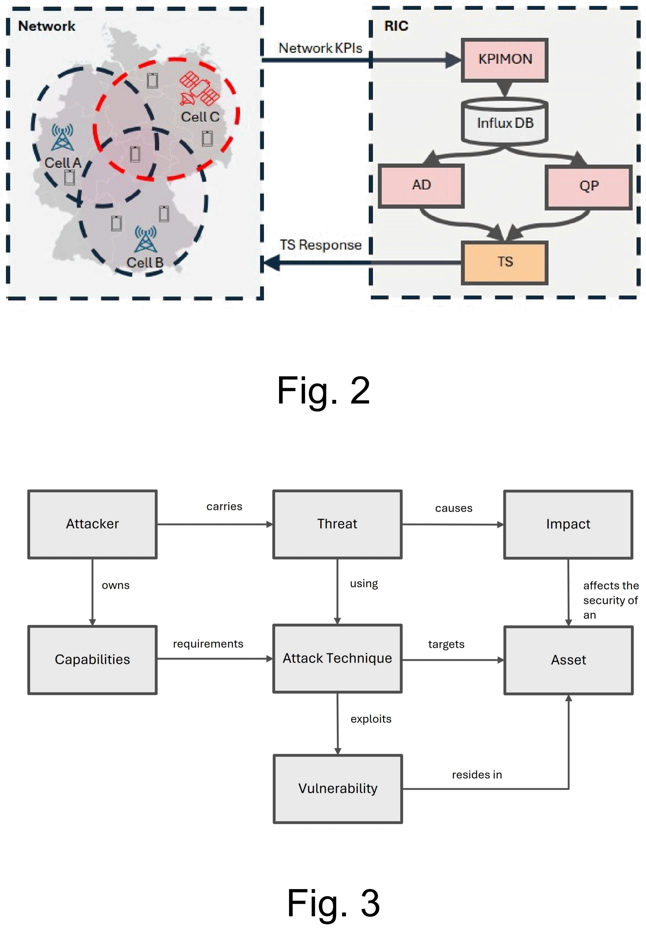

One of the most important tasks of the near-RT-RIC is the TS task, as it is responsible for managing the UE cells' connection in the network. The TS flow illustrated in Fig. 2 demonstrates a network topology where UE is located within the reception range of cells A, B, and C and can be connected by each of these cells. The network operator needs to make a decision regarding which cell the UE should be connected to. There are several Traffic Steering (TS- is a specialized tool - its primary purpose is to efficiently manage and optimize traffic flow within cellular networks) approaches to make this decision. Many handovers for the TS task are performed using Reinforcement Learning (RL), due to its policy-based decision-making nature [42, 47]. Another way to perform the TS task is to connect UE to a cell based on the maximum Received Signal Reference Power (RSRP). As a UE moves away from its serving cell, the RSRP from that cell decreases over time, while the RSRP from a nearby target cell increases as the UE approaches it [56]. One of the most common approaches presented in the OSC, is the Quality of Experience (QoE) prediction, which is based on QoE prediction for potential new target cells [20]. In this TS approach, there are four main xApps involved: KPI monitoring (KPIMON), anomaly detection (AD), QoE Predictor (QP), and TS. The TS flow illustrated in Fig. 2 contains the following steps; The KPIMON receives telemetry from the cells regarding the network status (e.g., cells and UE's KPIs) and writes them into the RIC influx database (DB). The AD xApp, scheduled to run every 10ms, identifies UE with an anomalous QoE that might need reassignment to another cell. Detection is performed by a pretrained isolation forest (iForest) model (an unsupervised learning algorithm for anomaly detection), based on UE metrics extracted by the KPIMON xApp and stored in the RIC. The AD xApp sends this list of anomalous UEs to the TS xApp for reallocation. Then, the TS calls the QP xApp for QoE prediction for each neighbor cell of all UE in the list. The QP trains a Vector Auto-Regression (VAR - a statistical framework used to capture the linear interdependencies among multiple time series variables) model for every UE neighbor cell, forecasts the Quality of experience (QoE - is a measure of the overall level of a customer's satisfaction and experience with a product or service and the vendor that's providing that product or service) and sends it back to the TS. Finally, based on the QP predictions and a given A1 policy from the non-RT-RIC, for each UE, the TS decides whether it should stay in its current serving cell or be handed over to a new target cell.

### Attacks on O-RAN

Adversaries may exploit the inherent vulnerabilities of learning algorithms, and specifically ML algorithms, with various attack techniques, which are referred to as Adversarial Machine Learning (AML) [8, 9, 25, 50]. Potential adversaries, their capabilities, and their goals, identify threats to ML production systems within O-RAN. Also, UE can produce manipulated signals that lead to incorrect anomaly detection and QoE classification. Therefore, the UE influences the model's decision-making process by presenting inputs that are very similar to legitimate data but designed to cause misclassification or incorrect predictions [25].

### O-RAN Attack Mitigation

Growing concerns over attacks on O-RAN ML systems have prompted research on mitigation of such attacks. Both white-box and black-box evasion attacks have been demonstrated on Deep Reinforcement Learning (DRL)-based traffic steering [42], revealing the impact of adding noise into the UE's metrics. These attacks showed that PGD attack can reduce coverage rates by as much as 50%, while jamming attacks result in up to a 25% reduction in coverage. To counter these effects, two mitigation techniques were proposed: (1) adversarial training [22], and (2) regularized training [63]. Both techniques were found to improve model robustness against such attacks [9].

Network cells have not been considered as untrusted elements in the RAN as potential threat actors or proposed mitigation strategies for such types of attacks.

### Threat Model

The intelligent ML systems introduced in O-RAN have vulnerabilities rooted in the inherent limitations of their underlying learning algorithms. Fig. 3 illustrates the identification of the entities and their relations of the TS flow, as presented in the NIST ontology [55]. The entities are described as follows:
- Attacker: A malicious operator running a malicious cell operating in the O-RAN network.
- Adversarial Capabilities: (a) The malicious cell can manipulate the KPIs it reports to the RIC. (b) The malicious cell has knowledge of the targeted TS task flow.
- Threat: A malicious cell disrupts the TS process by influencing the QP model's QoE predictions, resulting in an unfair allocation of UE to the malicious cell.
- Vulnerability: Refers to the inherent ability to manipulate the input of the ML model used by the QP, causing it to inaccurately predict QoE.
- Technique: Query-based evasion attack.
- Assets: The TS task hosted on the near-RT RIC, responsible for the allocation of UE to cells.
- Impact: The attacker is able to serve more UE than it is supposed to, which can: (a) cause a malicious cell to receive payment for serving UE's subscribers that would receive better service from other cells and thus reduce other cells' income. (b) reduce the QoE of UE affected by the attack, since providing service to UE that would receive a better QoE by other cells.

It is therefore an object of the present invention to provide a method for improving the security and reliability of O-RAN systems by identifying vulnerabilities and applying effective countermeasures.

It is another object of the present invention to provide a method for improving the security and reliability of O-RAN systems to protect them against adversarial exploits.

It is a further object of the present invention to provide a method for improving the security and reliability of O-RAN systems and prevent both network operators and protect UE from potential harm.

Other objects and advantages of the invention will become apparent as the description proceeds.

### Summary of the Invention

An Al-based method for detecting adversarial cell telemetry vulnerabilities in real time resulting from O-RAN's openness and multi-operator untrusted structure, comprising the steps of:
a) extracting relevant time-series features from the reporting cells and UEs Key Performance Indicators (KPIs);
b) training a dedicated AE model for each cell;
c) generating new enriched feature vectors that capture contextual information from both each specific cell and the entire network using compressed latent space from each AE model, concatenated with the aggregated latent spaces from all other cells;
d) training an additional AE for each cell using the new enriched feature vectors, thereby reconstructing the original features;
e) training a classifier to compare the output of the second model to the input of the first model; and
f) if the loss between the input and output exceeds a predefined threshold, classifying the input as untrusted, otherwise classifying the input as trusted.

The training process may be an unsupervised learning process, performed using benign data to learn benign data behavior.

The classification may provide indications whether the KPIs of an examined cell are benign or adversarial.

Detection may be based on a Long Short-Term Memory (LSTM) autoencoder (AE) architecture.

The method may further comprise the step of generating an attack threat model, representing the vulnerabilities, in which a cell is the threat actor targeting the TS flow to obtain more UE to serve.

The method may further comprise the step of using an open-source testbed environment that allows live data collection including a closed-loop wireless network simulator connected to an OSC RIC cluster.

The attack may be applied by an attacker by:
a) training a substitute QP model, which replicates the behavior of the target model used in the TS flow;
b) using the substitute model, to learn the model's decision boundaries and behavior;
c) identifying the minimal input perturbations that need to be added to the cell's KPIs to manipulate the QP model by analyzing the decision boundaries;
d) performing an adversarial evasion attack to generate adversarial samples;
e) reporting crafted adversarial samples, representing perturbed KPIs, to the RIC as legitimate data and storing adversarial samples in the RIC database;
f) upon detecting that UE required cell allocation, requesting a QoE prediction for the potential new target cells; and
g) predicting an artificially high QoE for the malicious cell the QP model, based on the adversarial samples, to thereby allocate UE to the malicious cell.

Detection may be performed by:
a) extracting relevant time-series features are from the KPIs reported by cells and UE;
b) for every cell, training a dedicated AE model to learn the patterns in the time-series features;
c) for a network and the network KPI reports R, identifying a framework to reconstruct the original network reports;
d) examining the loss function score between the reconstructed report F(R) and the original report (R); and
e) if loss function score is higher than the threshold T, the classifier C will return a trusted result; otherwise, the classifier C will return an untrusted result.

An initial AE training may be performed by:
a) training a dedicated AE for each cell, where each AE is based on an LSTM AE architecture and designed to encode every time window to a new dimensional latent space representation; and
b) decoding the time window back to the original time window, to obtain a trained LSTM AE for each cell in the network.

Enriched AE training may be performed by:
a) training a second round of AE models for each cell, where the AE models encode the enriched feature set to a new latent space using LSTM layers;
b) training the AE models to decode and reconstruct the first feature set, thereby allowing the AE models learn to incorporate information from the entire network.

The method may further comprise the step of classifying Network Reports by:
a) propagating the cell reports throughout the framework;
b) when cell reports reach the RIC, extracting the first feature set and encoding the first feature set by its AE, to produce the latent embedding;
c) using the latent embedding to generate the enriched feature set;
d) feeding enriched feature set into the second AEs, to reconstruct the first feature set; and
e) classifying the reports according to a predefined threshold, based on a certain policy provided by the operator.

An Al-based system for detecting adversarial cell telemetry vulnerabilities in real time resulting from O-RAN's openness and multi-operator untrusted structure, comprising:
a) a computerized device comprising at least one processor and associated memory, being configured to:
b) extract relevant time-series features from the reporting cells and UEs Key Performance Indicators (KPIs);
c) train a dedicated AE model for each cell;
d) generate new enriched feature vectors that capture contextual information from both each specific cell and the entire network using compressed latent space from each AE model, concatenated with the aggregated latent spaces from all other cells;
e) train an additional AE for each cell using the new enriched feature vectors, thereby reconstructing the original features;
f) train a classifier to compare the output of the second model to the input of the first model; and
g) if the loss between the input and output exceeds a predefined threshold, classify the input as untrusted, otherwise classifying the input as trusted.

### Brief Description of the Drawings

The above and other characteristics and advantages of the invention will be better understood through the following illustrative and non-limitative detailed description of preferred embodiments thereof, with reference to the appended drawings, wherein:
- Fig. 1 shows an O-RAN architecture high-level overview;
- Fig. 2 is High-level overview of the relevant components in the TS flow;
- Fig. 3 illustrates a threat analysis based on NIST ontology;
- Fig. 4 illustrates the steps of an attack flow;
- Fig. 5 illustrates an LSTM-autoencoder framework architecture;
- Fig. 6a illustrates a Testbed Environment with OSC near-RT RIC Kubernetes cluster;
- Fig. 6b illustrates a Testbed Environment with the wireless network simulator;
- Figs. 7a and 7b illustrate the amount of UE for each cell (BS1-BS6) during each of the network iterations in the examined scenarios;
- Figs. 8a and 8b illustrate the network topology during the benign scenario and MAS, respectively; and
- Fig. 9 illustrates the results of a sequence-based detection approach.

### Detailed Description of the Invention

The present invention provides a threat model in which the threat actor is the cell (i.e., a cellular operator). An adversarial cell can disrupt the network in several ways, such as reducing UEs migration to other cells or executing other denial-of-service (DoS) attacks. This type of threat may be described by an Adversarial Perturbation Against Traffic Efficiency (APATE) attack, which is an evasion attack [11] targeting the Traffic Steering (TS) flow (part of O-RAN RIC use cases [5]) which is responsible for dynamically and managing network traffic.

Malicious cells can exploit the multi-operator network to manipulate the TS flow and unfairly increase their UE allocations (the APATE attack). The risks that arise from applying the APATE attack, not only undermine the integrity of the network but also degrades the QoE for UEs, presenting new significant security challenges for the O-RAN architecture.

The attacker misleads the TS flow into assigning additional UE to its cell by falsely manipulating the TS's ML model that is responsible for the Quality of Experience (QoE) predictions (i.e., attacking the QoE predictor referred to as the QP). During an APATE attack, the attacker trains a substitute model of the QP model and uses this model to craft adversarial samples, i.e., samples that mislead the QP and cause it to make an incorrect prediction. The crafted adversarial samples are then used to query the QP target model, maliciously leading it to forecast an artificially high QoE for the attacker's cell, by misleading the TS, which results in an unfair allocation of UE to the malicious cell.

The proposed threat model considers the vulnerabilities resulting from O-RAN's openness and multi-operator untrusted structure. According to the proposed threat model, an attack (APATE), in which a cell is the threat actor targeting the TS flow to obtain more UE to serve is carried out.

The present invention also proposes an open-source testbed environment that includes a closed-loop wireless network simulator connected to the OSC RIC cluster that enables realistic and live data collection.

The present invention also provides an Al-based system for detecting adversarial cell telemetry vulnerabilities in real time resulting from O-RAN's openness and multi-operator untrusted structure, which comprises a computerized device comprising at least one processor and associated memory that is configured to extract relevant time-series features from the reporting cells and UEs Key Performance Indicators (KPIs); train a dedicated AE model for each cell; generate new enriched feature vectors that capture contextual information from both each specific cell and the entire network using compressed latent space from each AE model, concatenated with the aggregated latent spaces from all other cells; train an additional AE for each cell using the new enriched feature vectors, thereby reconstructing the original features; train a classifier to compare the output of the second model to the input of the first model; if the loss between the input and output exceeds a predefined threshold, classify the input as untrusted, otherwise classifying the input as trusted.

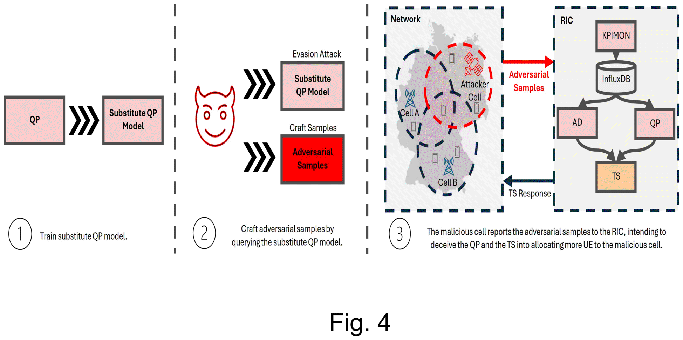

Fig. 4 illustrates the Adversarial Perturbation Against Traffic Efficiency (APATE), designed to manipulate network TS by attacking the QP model. The attacker's objective is to maximize the amount of UE assigned to attacker's service. To achieve this, the attacker manipulates its own KPIs to mislead the QP model into forecasting a higher QoE than the actual QoE. To execute this attack, the malicious cell needs to know which TS approach is implemented on the network. This will allow the attacker to replicate the behavior of the target model.

The attack unfolds in three main stages: (1) The attacker begins by training a substitute QP model, which replicates the behavior of the target model used in the TS flow. (2) Using the substitute model, the attacker learns the model's decision boundaries and behavior. By analyzing the decision boundaries, the attacker identifies the minimal input perturbations that need to be added to the cell's KPIs to manipulate the QP model. Then the attacker performs an adversarial evasion attack to generate adversarial samples. (3) The crafted adversarial samples, representing the perturbed KPIs, are reported to the RIC as legitimate data. These adversarial samples are written to the RIC database by the KPIMON xApp. When the AD xApp detects that UE might require cell allocation, the TS xApp requests the QP xApp for a QoE prediction for the potential new target cells. At this point, the QP model predicts an artificially high QoE for the malicious cell, based on the adversarial samples, thereby causing the TS xApp to allocate UE to the malicious cell.

The proposed attack model is formally described as follows: let *N =* (*V^{cl}V ^{ue}, E*) denote the network bipartite graph
where *V^{cl}* = {*v^{cl}, v^{cl},..., v^{cl}*} are the cell's nodes and and ${V}^{ue} = \left\{{v}_{1}^{ue},{v}_{2}^{ue},…,{v}_{m}^{ue}\right\}$ are the UE's nodes, and n and m are respectively the number of cells and number of user equipments.

The edges *E* ⊆ *V^{cl}* × *V*^*ue* are defined by serving connections between pairs of cells and UE. For example, if ${v}_{x}^{cl}$ is the serving cell of UE *v^{ue},* then (*v^{cl}, v^{ue}*) ∈ *E.*

The objective of the attacker cell ${v}_{adv}^{cl}$ is to find a perturbation noise *δ* that can be added to its KPI reports *R,* such that the QP model will predict a higher QoE than it should as presented in Eq. (1) where *δ** represents the optimal perturbation, *Q* is the QP model, and *y* is the true QoE prediction. The attacker sends these crafted adversarial samples to the RIC where they are incorporated into the TS flow. This manipulation leads the QP model to overestimate the QoE for the adversarial samples, potentially resulting in unjustified greater UE allocations (*v^{cl} , v^{ue}*) to the adversarial cell. ${R}_{adv} = R + {δ}^{∗} , {δ}^{∗} = {argmax}_{δ} \left(L\left(Q\left(R+δ\right),y\right)\right)$ Eq. (1a)

The APATE attack poses a significant threat to resource management by targeting the network TS. To mitigate these types of attacks and ensure that O-RAN's legitimate activity continues, a Monitoring Adversarial RAN Reports (MARRS) detection method is proposed, which is a practical Al-based detection method, to detect untrusted actors attempting to disrupt legitimate network operations, such as in attacks like APATE and to mitigate the attack and future attacks based on this threat model. The MARRS framework implements a method to detect compromised telemetry in real time, based on a Long Short-Term Memory (LSTM) autoencoder (AE) architecture (a specialized recurrent neural network architecture designed for sequence data, combining LSTM layers to encode temporal input into a compressed representation and reconstruct it back, typically used for unsupervised anomaly detection and dimensionality reduction) that MARRS extracts relevant time-series features from the reporting cells and UEs Key Performance Indicators (KPIs) and trains a dedicated AE model for each cell. Then, MARRS uses the compressed latent space from each AE model, concatenated with the aggregated latent spaces from all other cells, to generate new enriched feature vectors that capture contextual information from both the specific cell and the entire network. Next, an additional AE for each cell using the new enriched feature vector is trained, this time in an attempt to reconstruct the original features. Finally, a classifier is trained to compare the second model's output to the first model's input; if the loss between them exceeds a predefined threshold, then the input is classified as untrusted; otherwise it is classified as trusted. The entire training process is performed using benign data to learn benign data behavior, i.e., unsupervised learning. At inference time, MARRS's classification will indicate whether the examined cell's KPIs are benign or adversarial.

This framework is designed to detect adversarial cell telemetry (reported KPIs) in real time. MARRS can be deployed as an xApp (a software tool used by a RIC to manage network functions in near-real time) on the near-RT RIC, thereby providing immediate notifications about whether a cell's telemetry can be trusted. The detection architecture is based on LSTM networks, which have been proven to be particularly effective for anomaly detection in time-series data, especially when combined with AE architectures [30, 48]. LSTM AEs are trained to reconstruct normal input sequences, leveraging the LSTM's ability to capture long-term dependencies in real-time. A two-layer combination of LSTM and AEs has been utilized to capture not only individual cell behavior, but the contextual interactions of a specific cell within the entire network.

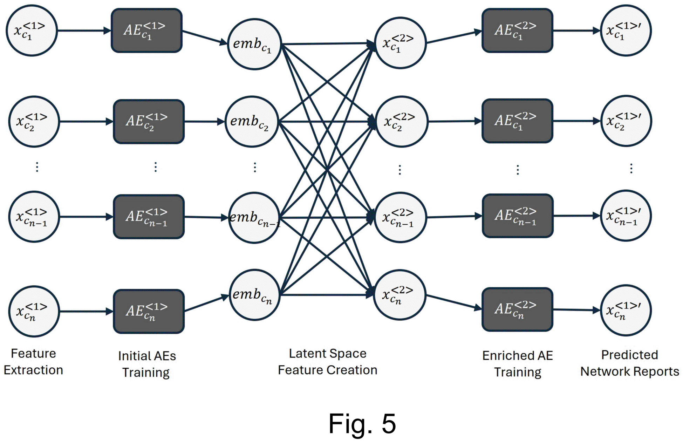

Fig. 5 illustrates the detection framework architecture, which operates according to the following steps:
(1) Feature Extraction and Initial AE Training: At this step, relevant time-series features are extracted from the KPIs reported by cells and UE. Then, for every cell, a dedicated AE model is trained to learn the patterns in these features.
(2) Latent Space Feature Creation: At this step, the latent representations from the first set of AE models is used, so new enriched feature vectors are generated. This is achieved by concatenating the latent space of a specific cell's AE with aggregated latent spaces from other cells, thereby effectively capturing both local and global network contexts.
(3) Enriched AE Training: At this step, a second AE is trained for each cell, using the enriched feature vectors as input. The goal is to reconstruct the original features from these vectors, thereby leveraging the additional contextual information.
(4) Classification of Network Reports: At this step, a classifier is trained to compare the reconstructed output of the second AE with the original input features from the first AE. If the reconstruction loss exceeds a predefined threshold, the input is labeled as untrusted; otherwise, it is labeled as trusted. By integrating contextual insights and multi-stage reconstruction, MARRS serves as a robust mechanism for the detection and mitigation of adversarial activity in the network.

Given a network and the network KPI reports R, it is required to identify a framework F that will reconstruct the original network reports. The loss function score *ℓ*(*F* (*R*), *R*) between the reconstructed report *F*(*R*) and the original report (R) is examined. If it is higher than the threshold T, the classifier C will return a trusted result (i.e., 0), otherwise, the classifier C will return an untrusted result (see Eq. (2)). $C \left(R, T\right) = \left\{\begin{matrix}0 , if T > l \left(F\left(R\right),R\right) \\ 1 , if T \leq l \left(F\left(R\right),R\right)\end{matrix}\right.$ Eq. (2)

### Feature Extraction and Initial AE Training

First, relevant time-series features from the network are extracted, as summarized in Table 2. For a given O-RAN network, KPIs are extracted, such as the physical resource block (PRB) aggregation period, PRB downlink/uplink ratios, and the amount of UE currently in the cell, newly entering UE, and UE leaving the cell. Additionally, UE-specific metrics, including the average and standard deviation of the Packet Data Convergence Protocol (PDCP) downlink and uplink throughput, UE PRB downlink/uplink ratios, and signal quality indicators such as the reference signal received power (RSRP) and signal-to-noise ratio (RSSNIR) are extracted. These features result in 11 time-series features for each cell. These features were extracted as they are the ones used in the TS flow (defined in the OSC RIC [12]). Finally, all features are standardized to produce scaled values and split to sliding time windows denoted as ${X}_{{c}_{i}}^{\left〈1\right〉}$

After extracting ${X}_{{c}_{i}}^{\left〈1\right〉}$ from the network, an initial AE training is performed by training a dedicated AE for each cell, denoted as ${AE}_{{c}_{i}}^{\left〈1\right〉}$. Each AE is based on an LSTM AE architecture and designed to encode every time window ${x}_{{c}_{i}}^{\left〈1\right〉} ∈ {X}_{{c}_{i}}^{\left〈1\right〉}$ to a new dimensional latent space representation *emb_{ci}* and then, decode it back to the original ${x}_{{c}_{i}}^{\left〈1\right〉}$*.* Completing this phase results in a trained LSTM AE for each cell in the network ${AE}_{{c}_{i}}^{\left〈1\right〉}$*.*

Then, a latent space feature is created by conducting a second round of feature extraction, to generate enriched feature vectors for each cell, to thereby capture both contextual information from the specific cell and the entire network. To achieve this, the embedded (*emb_{ci}*) latent space representations produced by the trained ${AE}_{{c}_{i}}^{\left〈1\right〉}$ from the initial feature set ${X}_{{c}_{i}}^{\left〈1\right〉}$ is used. For each cell ${v}_{i}^{cl}$, a new feature set is constructed by concatenating its latent space embedding with an aggregated embedding (e.g., average) derived from the rest of the network. ${X}_{{c}_{i}}^{\left〈2\right〉} = {emb}_{{c}_{i}} ∩ \frac{1}{n - 1} {\sum }_{j ∈ {V}^{cl} \ {v}_{i}^{cl}} {emb}_{{c}_{j}}$ Eq. (3) where *cᵢ* and *cⱼ* represent the features associated with the cell nodes ${v}_{i}^{cl}$ and ${v}_{j}^{cl}$, respectively, and *n =* |*V^{cl}*| represents the number of cells in the network. This approach enriches the feature set by capturing both local and network-wide contextual information.

The next step in the proposed framework involves Enriched AE training by training a second round of AE models ${AE}_{{c}_{i}}^{\left〈2\right〉}$ for each cell ${v}_{i}^{cl} ∈ {V}^{cl}$. In this step, the ${AE}_{{c}_{i}}^{\left〈2\right〉}$ models are designed to encode the v enriched feature set ${X}_{{c}_{i}}^{\left〈2\right〉}$ to a new latent space using LSTM layers similar to what was done in ${AE}_{{c}_{i}}^{\left〈1\right〉}$. However, unlike the initial round, these new AEs are trained not to reconstruct their input ( ${x}_{{c}_{i}}^{\left〈2\right〉}$) but to decode and reconstruct the first feature set ${x}_{{c}_{i}}^{\left〈1\right〉}$. Through this process, the AE models learn to incorporate information from the entire network while effectively leveraging the specific reports from the individual cell, resulting in a more network-context-aware representation.

At the next step, classification of Network Reports is performed. After completing the second round of AE training, the framework is ready to detect malicious activity. To classify and detect this activity, the cell reports are propagated throughout the framework; when cell reports reach the RIC, the first feature set is extracted ( ${X}_{{c}_{i}}^{\left〈1\right〉}$) and encoded by its ${AE}_{{c}_{i}}^{\left〈1\right〉}$, producing the latent embedding (*emb_{ci}* ). This embedding is then used to generate the enriched feature set ${X}_{{c}_{i}}^{\left〈2\right〉}$ as defined in Eq. (3), which is fed into the second AEs noted as ${AE}_{{c}_{i}}^{\left〈2\right〉}$, to reconstruct the first feature set as ${X}_{{c}_{i}}^{\left〈1\right〉 ′}$. If the models are trained effectively, the reconstruction loss ℓ between the given feature set, extracted from time window report ${x}_{{c}_{i}}^{\left〈1\right〉}$ and the framework output ${x}_{{c}_{i}}^{\left〈1\right〉 ′}$ is expected to be low for benign reports and high for malicious or compromised reports. To classify these reports, a threshold is defined, based on a certain policy provided by the operator. The policy should determine which classification metrics (e.g., recall, precision, F1 score) should be optimized depending on the operator's preferences regarding the network's performance. Finally, reports with reconstruction loss *ℓ* exceeding T are classified as untrusted, while those below T are classified as trusted as in Eq. (2).

An extension of the MARRS approach (denoted as S-MARRS) which is based on sequence detection is established. During inference, given a time window of the same size used in training, the framework is expected to yield a low reconstruction loss for benign time windows and significantly higher losses for malicious time windows. In this approach, both malicious inputs and unrelated outliers that exceed the framework's reconstruction loss threshold are classified as untrusted. This can result in a higher False Positive Rate (FPR) in the detection method, if a benign sample is classified as untrusted (positive) falsely. To address this issue and reduce the FPR, detection based on sequences of time windows is applied using specific classification rules defined on the entire sequence. In this detection method, given a trained framework F, sequence of time windows *S* = (*R*₁, *R*₂,..., *Rₖ*), classification rule *RL* (e.g. "majority vote"), and threshold T, the entire sequence is classified as either trusted or untrusted according to the rule. For example, considering a sequence of network time windows' KPI reports *S* = (*R*₁*, R*₂*,...*, *Rₖ*) size *k,* "majority vote" rule, and classifier C (as in Eq. (2)), reports (*R*₁*, R*₂,*...*, *Rₖ*), are classified: $CS \left(S, T\right) = \left\{\begin{matrix}untrusted , if , \frac{k + 1}{2} \leq {\sum }_{j = 1}^{k} C \left(R, T\right) \\ trusted , else\end{matrix}\right.$ Eq. (4)

In this example, if most of the sequence exceeds T, the entire sequence is classified as untrusted. This approach allows reducing the false positives that may arise due to outliers and focus more on malicious behavior.

### Test Environment

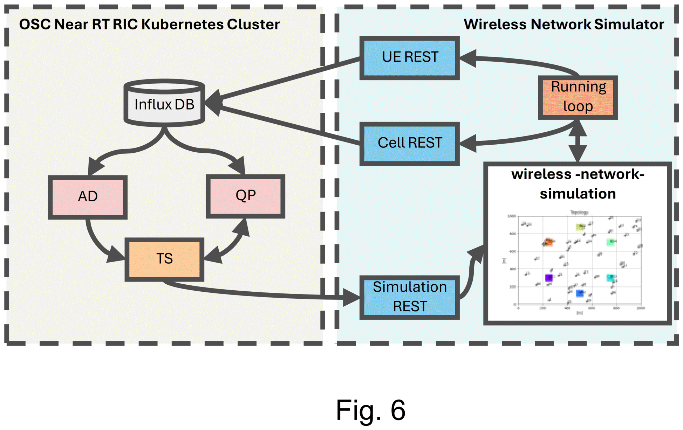

Fig. 6 illustrates a simulation testbed environment that contains two primary components:
(1) Wireless Network Simulator [18]: Which simulates real-time network scenarios involving UE and gNB cells.
(2) O-RAN Software Community (OSC) Near-RT RIC Platform [12]: Deployed within a Kubernetes cluster. This platform serves as a dynamic hosting environment for the relevant xApps in the TS flow, including the AD, QoE Predictor (QP- is an Xapp in the Traffic Steering O-RAN use case, which uses the following Xapps: Traffic Steering, which sends prediction requests to QP; QoE Predictor, which predicts and sends that prediction back to Traffic Steering), and TS xApps).

In deployment, these two components are isolated from each other to simulate real-world usage and communicate within a closed-loop system via a REST API. The interaction occurs as follows:
At the end of each simulation iteration, the simulator reports the current KPIs (both UE and cell KPIs) to the RIC cluster. Simultaneously, the TS xApp in the RIC platform generates handover requests based on those KPIs and sends them back to the simulator for UE allocation.

A wireless network simulator is deployed separately from the near-RT-RIC cluster on an AWS EC2 instance running Ubuntu 20.04 LTS (Focal Fossa). The simulation begins with the configuration of network parameters, including the geographical topology size, initial locations and velocities of UE, and cell types (e.g., gNB, eNB) along with their respective locations. The simulation operates with two parallel threads, one of which manages the core simulation loop, while the other hosts a Flask app that listens for handover requests from the RIC.

Upon receiving a request, the Flask app processes it and updates the target cell allocation for the relevant UE. In each simulation iteration, UE either moves randomly or following predefined trajectories, and the simulator generates updated metrics for both UE and cells, formatted to align with the RIC requirements.

Each report has the following KPIs:
UE ID, serving cell ID, location, timestamp, PDCP aggregation period, PDCP throughput, PRB report timestamp, PRB aggregation period, PRB throughput ratios, reference signal received power (RSRP), reference signal received quality (RSRQ), and signal-to-noise ratio (SNIR). Cell KPIs include the cell ID, timestamp, PDCP aggregation period, PDCP throughput, PRB aggregation period, and PRB throughput. This way, the TS handover requests are reflected in real time in the simulation, allowing live UE allocation.

### OSC RIC Cluster

The RIC platform, deployed as a Kubernetes cluster (a distributed system designed to automate the deployment, scaling, and management of containerized applications) on an AWS EC2 instance running Ubuntu 20.04 LTS (Focal Fossa), hosts the TS flow xApps (AD, QP, and TS) as individual pods. It receives KPIs from the simulator, which functions as the RAN. Upon receiving these KPIs, the KPIMON xApp processes the metrics and writes them to the RIC's InfluxDB pod. Once the data is populated in the RIC database, the TS flow generates a handover request. This request is sent back to the simulator, completing one iteration of the closed-loop testbed. The process repeats continuously, until the simulation loop is completed.

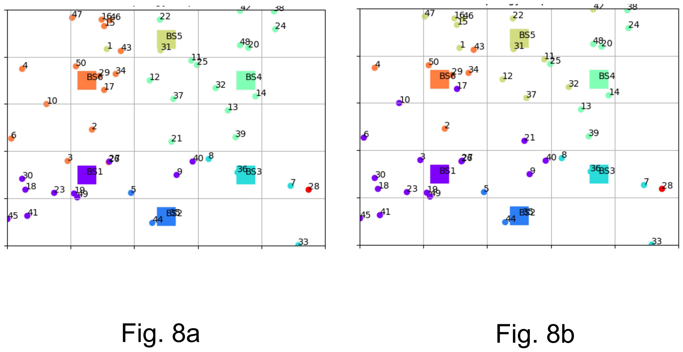

To evaluate the impact of the APATE attack, a set up a network topology with six gNB cells and 50 UEs randomly moving within this topology has been created, as shown in Fig. 8a. At the end of each iteration in the simulation loop, the simulator reports the state of the network to the RIC cluster. Then, the KPIMON xApp populates the RIC DB with the reported KPIs, and the TS flow begins. Once the TS makes a handover decision for the UE, the TS ends it back to the simulator. The simulator receives the TS handover request and updates the environment based on its decision.

APATE has been evaluated in two attack scenarios, using the closed-loop simulation:
(1) Single-Attack Scenario (SAS): A single malicious cell (BS5) executes the APATE attack, manipulating its KPI reports to mislead the TS into allocating it more UEs.
(2) Multi-Attack Scenario (MAS): Two malicious cells (BS1 and BS5) simultaneously execute the APATE attack, manipulating their KPI reports to mislead the TS into allocating them more UEs. For comparison, corresponding benign baseline scenarios have been establish, where all cells report trusted KPI telemetry to the RIC. To accurately model real-world attack progression, both attack scenarios have been initialized using identical conditions to their benign baseline scenarios, while the benign scenarios initialized randomly. The velocity steps are consistent across all scenarios.

To execute the APATE, the HopSkipJump attack if employed [17] from the Adversarial Robustness Toolbox (ART) [40], in order to generate adversarial samples. This required categorizing the QP outputs into four quality levels: poor, average, good, and excellent, with the goal of manipulating the QP to forecast a higher quality category to the attacker cell than the true one.

To evaluate MARRS's detection capabilities, the framework has been trained using a training process that begins with data collection, conducted through closed-loop benign simulation scenarios. In these scenarios, a network topology has been initialized, which consists of six gNB cells and 50 UEs, randomly moving within the topology as illustrated in Fig. 8a. From these simulations, relevant features have been extracted, as detailed in Table 2, resulting overall dataset for a training size of 10531 records.

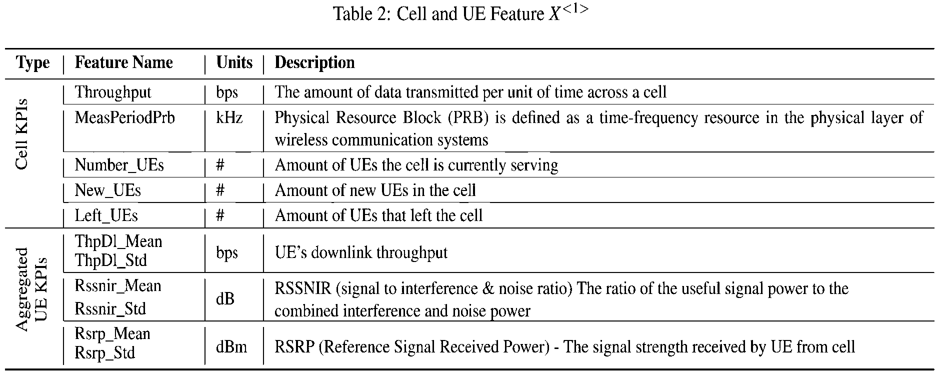

The model was trained using a feature set, denoted as *X*^{*<*1*>*}, which serves as the input for training the first layer of *AE*^{*<*1*>*}s in the framework. The *AE*^{*<*1*>*} architecture consists of an LSTM encoder followed by an LSTM decoder with a fully connected (FC) output layer. The models are implemented in PyTorch [45], using the Adam optimizer and mean squared error (MSE) as the loss function. After training the *AE*^{<1>}s*,* the second feature set (*X*^{*<*2*>*})*,* has been extracted according to Eq. (3), which is subsequently used to train the next layer of AEs (*AE*^{<2>})*.*

The *AE*^{<2>}s use the same architecture, optimizer, and loss function as the *AE*^{<1>}s*.* Both AE layers are trained for 200 epochs and the hyperparameters such as the number of LSTM layers hidden size, and learning rate are tuned using Optuna [2]. In these experiments, the threshold policy T was set to maximize the F1 score in the classification processes.

All compered benchmarks were trained using the same dataset and evaluated on the same test set.
(1) Isolation Forest (IF), an anomaly detection algorithm that isolates outliers by recursively partitioning data and scoring it based on the number of splits required to isolate an observation [32].
(2) One-Class SVM (OCSVM), which learns a decision boundary to separate benign data from outliers, treating all training data as belonging to one class [31].
(3) Autoencoder (AE), which learns to compress and reconstruct data using linear layers, with anomalies detected by measuring reconstruction error, assuming that benign data have lower errors than the anomalous data.

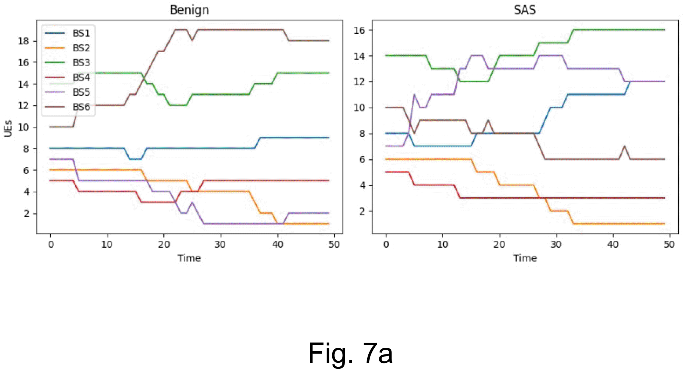

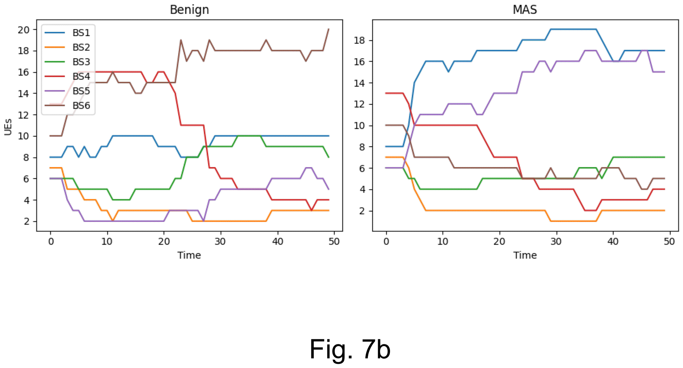

The experimental results of the APATE attack are presented in Fig. 7 and summarized in Table 3. Fig. 7 presents the network state for both attack scenarios and the corresponding benign scenarios:
(1) SAS with BS5 as the malicious cell (Fig. 7a)
(2) the MAS with both BS1 and BS5 as malicious cells (Fig. 7b). Each cell (BS1-BS6) is presented in a different color, with the y-axis representing the amount of connected UE during each iteration. Table 3 summarizes the two scenarios for each cell.

**Table 3: Amount of UE for each cell in each scenario - corresponding to Fig. 7.**

| | SAS | | | | | | | MAS | | | | | | |
|---|---|---|---|---|---|---|---|---|---|---|---|---|---|---|
| | Benign | | | Malicious | | | Difference | Benign | | | Malicious | | | Difference |
| cell ID | mean | min | max | mean | min | max | % | mean | min | max | mean | min | max | % |
| BS1 | 8.14 | 7 | 9 | 8.81 | 7 | 12 | 108.25% | 8.97 | 8 | 10 | 13.83 | 8 | 19 | 154.16% |
| BS2 | 4.64 | 1 | 6 | 4.21 | 1 | 6 | 90.77% | 4.27 | 2 | 7 | 3.73 | 1 | 7 | 87.46% |
| BS3 | 14.01 | 12 | 15 | 14.31 | 12 | 16 | 102.14% | 6.82 | 4 | 10 | 5.55 | 4 | 7 | 81.40% |
| BS4 | 4.59 | 3 | 5 | 3.83 | 3 | 5 | 83.49% | 11.04 | 3 | 16 | 8.45 | 2 | 13 | 76.53% |
| BS5 | 4.27 | 1 | 7 | 10.61 | 7 | 14 | 248.50% | 4.56 | 2 | 7 | 11.21 | 6 | 17 | 245.68% |
| BS6 | 14.34 | 10 | 19 | 8.21 | 6 | 10 | 57.27% | 14.34 | 10 | 20 | 7.23 | 4 | 10 | 50.39 |

Each row represents a cell, while the columns represent the different scenarios; for each scenario, presented the average amount of UE served, the percentage difference from the benign scenario, and minimum and maximum UE counts.

When examining the results regarding the SAS, it can be seen that a significant increase of 248.5% in the average amount of UE served by the malicious cell BS5 in the malicious scenario compared to the benign scenario. Additionally, a higher minimum number of serving UE for BS5 in the malicious scenario is observed, indicating that fewer UE left compared to the benign scenario. In the MAS, it can be seen that the attack's impact across the entire network. The malicious cells BS1 and BS5 increased the amount of their served UE by 154.16% and 248.5%, respectively, while their neighbor cell BS6 suffered a 50.39% reduction in its average amount of served UE.

Figs. 7a and 7b demonstrate the impact of the attack by comparing UE distribution patterns across cells over time. In the SAS shown in Fig. 7a, where malicious cell BS5 (purple) executes the attack, different behavior between the benign and malicious scenarios was observed. While the benign scenario shows BS5's UE count decreasing over time, the malicious scenario shows a significant increase in its UE allocations. The MAS shown in Fig. 7b, where both BS1 (blue) and BS5 (purple) execute the attack, shows several distinct patterns. In the benign scenario, both BS1 and BS5 maintain relatively stable UE counts. However, during the attack scenario, both malicious cells demonstrate increases in their UE allocations. This attack significantly impacts neighboring cell BS6 (brown), which experiences a substantial reduction in UE connections compared to its high allocation in the benign scenario.

Figs. 8a-8b present the network states for two scenarios: the benign scenario (Fig. 8a) and the MAS (Fig. 8b). In both figures, circles represent UE, and boxes represent cells, with each UE's color indicating its serving cell. Both Fig. 8a and Fig. 8b provide snapshots for specific simulation iteration. The figures illustrate the impact of the attack, which affects not only the attacker's cell but also neighboring cells, particularly BS6 (orange), by reducing the amount of UE it serves.

To evaluate MARRS method detection capability, the importance of gathering data over time in the simulation testbed has been demonstrated. The results are presented in Table 4, where each row presents different subsets of the training set that were used (*x*₁*, x*₂*, x*₃*, x*₄)*,* and the columns present the accuracy, precision, recall, and F1 scores. As can be seen, the more time the system operates, the more data it collects; accordingly, the classification metrics results improve.

**Table 4: Accuracy of the MARRS method over time**

| **Training Set** | **Accuracy** | **Precision** | **Recall** | **F1 Score** |
|---|---|---|---|---|
| *x*₁ | 0.873 | 0.793 | 1 | 0.884 |
| *x*₁*,x*₂ | 0.984 | 0.986 | 0.922 | 0.949 |
| *x*₁*,x*₂*,x*₃ | 0.964 | 0.932 | 1 | 0.965 |
| *x*₁*,x*₂*,x*₃*,x*₄ | 0.992 | 0.958 | 1 | 0.978 |

Comparative performance results of MARRS with respect to other detection methods are presented in Table 5, where each row represents a method used to detect the APATE attack, and the columns contain the classification metric values on the test set. As can be seen, MARRS outperforms all other methods on the F1 score and accuracy metrics.

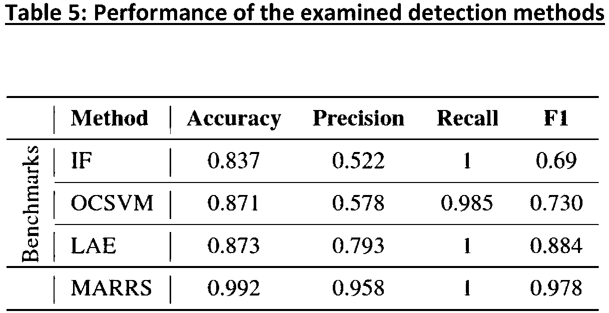

In ablation studies, components of an ML model are systematically removed or altered to assess their impact on the model's overall performance. The goal is to determine how each part contributes to the overall effectiveness of the model [37,39]. This evaluation process has been employed to examine the effectiveness of MARRS's architecture. The results are summarized in Table 6, where each row represents the experiment (*AE*^{<1>} and *AE*^{*<*1+>})*,* and the columns contain the classification metric values. The results show how incorporating latent space features as contextual information from the entire network improves the detection of malicious cell reports.

**Table 6: Ablation study results**

| **Layer** | **Accuracy** | **Precision** | **Recall** | **F1 Score** |
|---|---|---|---|---|
| *AE*^{<1>} | 0.917 | 0.932 | 1 | 0.964 |
| *AE*^{<1+>} | 0.966 | 0.934 | 1 | 0.965 |
| MARRS | 0.992 | 0.958 | 1 | 0.978 |

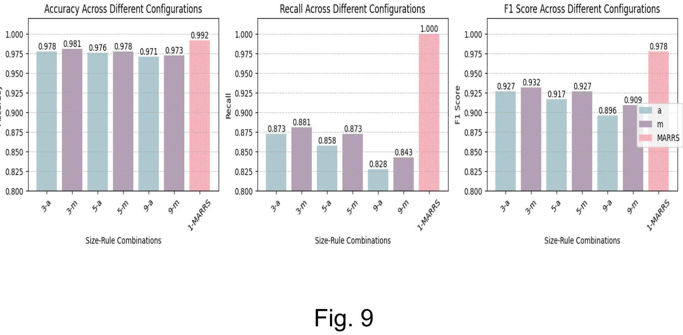

Fig. 9 presents the results of a sequence-based detection approach, which reduces the false positives that may result from outliers and focuses on malicious behavior by examining a sequence of KPI time windows, instead of an individual time window. The classification rules used in this experiment are as follows:
A (all rule): The sequence is classified as untrusted if all windows within the sequence exceed the threshold T; otherwise, it is classified as trusted.
M (majority rule): The sequence is classified as untrusted if the majority of windows within the sequence exceed the threshold T; otherwise, it is classified as trusted.

In the x-axis in Fig. 9, the number before the letters "A" or "M" indicates the sequence size. The evaluation results for accuracy, recall, and F1 score are summarized in Fig. 9. In terms of precision, all configurations of "A" and "M" obtained a perfect score of 1. However, when a sequence-based configuration was not used, which is referred to as the 1-MARRS (see Fig. 9 the last column) detection approach, precision of 0.958 was obtained. The primary goal of adopting a sequence-based detection approach is to minimize the FPR, and the results demonstrate that the FPR directly impacts precision and indirectly influences metrics like recall and the F1 score. In configurations where precision is a perfect 1, this indicates the absence of false positives, i.e., benign time windows were not misclassified as untrusted. On the other hand, the non-sequence detection approach achieved a perfect recall of 1 but at the expense of a higher FPR, which reduced its precision compared to the sequence-based configurations. This highlights the tradeoff between high recall and precision when the FPR is not adequately controlled.

As various embodiments and examples have been described and illustrated, it should be understood that variations will be apparent to one skilled in the art without departing from the principles herein. Accordingly, the invention is not to be limited to the specific embodiments described and illustrated in the drawings.

### References

[1] Ijaz Ahmad, Tanesh Kumar, Madhusanka Liyanage, Jude Okwuibe, Mika Ylianttila, and Andrei Gurtov. Overview of 5g security challenges and solutions. IEEE Communications Standards Magazine, 2(1):36-43, 2018.
[2] Takuya Akiba, Shotaro Sano, Toshihiko Yanase, Takeru Ohta, and Masanori Koyama. Optuna: A next-generation hyperparameter optimization framework. In Proceedings of the 25th ACM SIGKDD international conference on knowledge discovery & data mining, pages 2623-2631, 2019.
[3] Hamed Alimohammadi, Sotiris Chatzimiltis, Samara Mayhoub, Mohammad Shojafar, Seyed Ahmad Soleymani, Ayhan Akbas, and Chuan Heng Foh. Kpi poisoning: An attack in open ran near real-time control loop.
[4] O-RAN ALLIANCE. Wg2: Non-real-time ran intelligent controller and a1 interface workgroup, 2022.
[5] O-RAN ALLIANCE. Wg3: Near-real-time ric and e2interface workgroup, 2022.
[6] O-RAN ALLIANCE. Wg11: O-ran work group 11 (security work group) security requirements and controls specifications, 2024.
[7] Wilfrid Azariah, Fransiscus Asisi Bimo, Chih-Wei Lin, Ray-Guang Cheng, Navid Nikaein, and Rittwik Jana. A survey on open radio access networks: Challenges, research directions, and open source approaches. Sensors, 24(3):1038, 2024.
[8] Pau Baguer, Girma M Yilma, Esteban Municio, Gines Garcia-Aviles, Andres Garcia-Saavedra, Marco Liebsch, and Xavier Costa-Pérez. Attacking o-ran interfaces: Threat modeling, analysis and practical experimentation. IEEE Open Journal of the Communications Society, 2024.
[9] Ravikumar Balakrishnan, Marius Arvinte, Nageen Himayat, Hosein Nikopour, and Hassnaa Moustafa. Enhancing o-ran security: Evasion attacks and robust defenses for graph reinforcement learning-based connection management. arXiv preprint arXiv:2405.03891,2024.
[10] Bharath Balasubramanian, E Scott Daniels, Matti Hiltunen, Rittwik Jana, Kaustubh Joshi, Rajarajan Sivaraj, Tuyen X Tran, and Chengwei Wang. Ric: A ran intelligent controller platform for ai-enabled cellular networks. IEEE Internet Computing, 25(2):7-17, 2021.
[11] Battista Biggio, Igino Corona, Davide Maiorca, Blaine Nelson, Nedim Šrndic, Pavel Laskov, Giorgio Giacinto, and Fabio Roli. Evasion attacks against machine learning at test time. In Machine Learning and Knowledge Discovery in Databases: European Conference, ECML PKDD 2013, Prague, Czech Republic, September 23-27, 2013, Proceedings, Part III 13, pages 387-402. Springer, 2013.
[12] Fransiscus Asisi Bimo, Ferlinda Feliana, Shu-HuaLiao, Chih-Wei Lin, David F Kinsey, James Li, Rittwik Jana, Richard Wright, and Ray-Guang Cheng. Osccommunity lab: The integration test bed for o-ran software community. In 2022 IEEE Future Networks World Forum (FNWF), pages 513-518. IEEE, 2022.
[13] Ron Bitton, Nadav Maman, Inderjeet Singh, Satoru Momiyama, Yuval Elovici, and Asaf Shabtai. Evaluating the cybersecurity risk of real-world, machine learning production systems. ACM Computing Surveys, 55(9):1-36, 2023.
[14] Leonardo Bonati, Michele Polese, Salvatore D'Oro, Stefano Basagni, and Tommaso Melodia. Open, programmable, and virtualized 5g networks: State-of-the-art and the road ahead. Computer Networks, 182:107516, 2020.
[15] Paulo Ricardo Branco da Silva, João Paulo Henriques Sales de Lima, Erika Costa Alves, William Sanchez Farfan, Victor Aguiar Coutinho, Thomas William do Prado Paiva, Daniel Lazkani Feferman, and Francisco Hugo Costa Neto. Evaluation of the latency of machine learning random access ddos detection in open ran. In Proceedings of the 30th Annual International Conference on Mobile Computing and Networking, pages 2306-2311, 2024.
[16] Chieh-Chun Chen, Chia-Yu Chang, and Navid Nikaein. Flexslice: Flexible and real-time programmable ran slicing framework. In GLOBECOM 2023-2023 IEEE Global Communications Conference, pages 3807-3812. IEEE, 2023.
[17] Jianbo Chen, Michael I Jordan, and Martin J Wainwright. Hopskipjumpattack: A query-efficient decision-based attack. In 2020 IEEE symposium on security and privacy (sp), pages 1277-1294. IEEE, 2020.
[18] Emanuele De Santis, Alessandro Giuseppi, Antonio Pietrabissa, Michael Capponi, and Francesco Delli Priscoli. Satellite integration into 5g: deep reinforcement learning for network selection. Machine Intelligence Research, 19(2):127-137, 2022.
[19] Panagiotis Demestichas, Andreas Georgakopoulos, Dimitrios Karvounas, Kostas Tsagkaris, Vera Stavroulaki, Jianmin Lu, Chunshan Xiong, and Jing Yao. 5g on the horizon: Key challenges for the radio-access network. IEEE vehicular technology magazine, 8(3):47-53, 2013.
[20] Marcin Dryjanski, 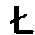 ukasz Ku 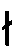 acz, and Adrian Kliks. Toward modular and flexible open RAN implementations in 6g networks: Traffic steering use case and O-RAN xapps. Sensors, 21(24):8173, 2021.
[21] Keith Dyer. Freshwave says four way operator sharing on same indoor small cells a world first, 2024.
[22] Ian J Goodfellow. Explaining and harnessing adversarial examples. arXiv preprint arXiv:1412.6572, 2014.
[23] Joshua Groen, Salvatore D'Oro, Utku Demir, Leonardo Bonati, Michele Polese, Tommaso Melodia, and Kaushik Chowdhury. Implementing and evaluating security in o-ran: Interfaces, intelligence, and platforms. IEEE Network, 2024.
[24] Vodafone Group. Vodafone announces expanded network sharing agreement with orange in spain, 2019.
[25] Edan Habler, Ron Bitton, Dan Avraham, Dudu Mimran, Eitan Klevansky, Oleg Brodt, Heiko Lehmann, Yuval Elovici, and Asaf Shabtai. Adversarial machine learning threat analysis and remediation in open radio access network (O-RAN). arXiv preprint arXiv:2201.06093, 2022.
[26] Mahmoud A Hasabelnaby, Mohanad Obeed, Mohammed Saif, Anas Chaaban, and MJ Hossain. Fromcentralized ran to open ran: A survey on the evolution of distributed antenna systems. arXiv preprint arXiv:2411.12166, 2024.
[27] Cheng-Feng Hung, You-Run Chen, CHI-Heng Tseng, and Shin-Ming Cheng. Security threats to xapps access control and e2 interface in o-ran. IEEE Open Journal of the Communications Society, 2024.
[28] Eugina Jordan. Ric: The next phase of open ran, 2024.
[29] Shin Yuan Kee. How does open ran add value in multioperator sharing?, 2021.
[30] Younjeong Lee, Chanho Park, Namji Kim, Jisu Ahn, and Jongpil Jeong. Lstm-autoencoder based anomaly detection using vibration data of wind turbines. Sensors, 24(9):2833, 2024.
[31] Kun-Lun Li, Hou-Kuan Huang, Sheng-Feng Tian, and Wei Xu. Improving one-class svm for anomaly detection. In Proceedings of the 2003 international conference on machine learning and cybernetics (IEEE Cat. No. 03EX693), volume 5, pages 3077-3081. IEEE, 2003.
[32] Fei Tony Liu, Kai Ming Ting, and Zhi-Hua Zhou. Isolation forest. In 2008 eighth IEEE international conference on data mining, pages 413-422. IEEE, 2008.
[33] Lixin Liu, Yuanjie Li, Hewu Li, Jiabo Yang, Wei Liu, Jingyi Lan, Yufeng Wang, Jiarui Li, Jianping Wu, Qian Wu, et al. Democratizing {Direct-to-Cell} low earth orbit satellite networks. In 21st USENIX Symposium on Networked Systems Design and Implementation (NSDI 24), pages 791-808, 2024.
[34] Madhusanka Liyanage, An Braeken, Shahriar Shahabuddin, and Pasika Ranaweera. Open ran security: Challenges and opportunities. Journal of Network and Computer Applications, 214:103621, 2023.
[35] Johannes Maisack. Deutsche telekom and telefónica share network infrastructure to enhance network coverage, 2021.
[36] Simona Marinova and Alberto Leon-Garcia. Intelligent o-ran beyond 5g: Architecture, use cases, challenges, and opportunities. IEEE Access, 12:27088-27114, 2024.
[37] Richard Meyes, Melanie Lu, Constantin Waubert de Puiseau, and Tobias Meisen. Ablation studies in artificial neural networks. arXiv preprint arXiv:1901.08644, 2019.
[38] Dudu Mimran, Ron Bitton, Yehonatan Kfir, Eitan Klevansky, Oleg Brodt, Heiko Lehmann, Yuval Elovici, and Asaf Shabtai. Evaluating the security of open radio access networks. arXiv preprint arXiv:2201.06080, 2022.
[39] Alessio Molinari. Designing a performant ablation study framework for pytorch, 2020.
[40] Maria-Irina Nicolae, Mathieu Sinn, Minh Ngoc Tran, Beat Buesser, Ambrish Rawat, Martin Wistuba, Valentina Zantedeschi, Nathalie Baracaldo, Bryant Chen, Heiko Ludwig, et al. Adversarial robustness toolbox v1. 0.0. arXiv preprint arXiv:1807.01069, 2018.
[41] Solmaz Niknam, Abhishek Roy, Harpreet S Dhillon, Sukhdeep Singh, Rahul Banerji, Jeffery H Reed, Navrati Saxena, and Seungil Yoon. Intelligent o-ran for beyond 5g and 6g wireless networks. In 2022 IEEE Globecom Workshops (GC Wkshps), pages 215-220. IEEE, 2022.
[42] Oner Orhan, Vasuki Narasimha Swamy, Thomas Tetzlaff, Marcel Nassar, Hosein Nikopour, and Shilpa Talwar. Connection management xapp for o-ran ric: A graph neural network and reinforcement learning approach. In 2021 20th IEEE International Conference on Machine Learning and Applications (ICMLA), pages 936-941. IEEE, 2021.
[43] Heejae Park, Tri-Hai Nguyen, and Laihyuk Park. An investigation on open-ran specifications: Use cases, security threats, requirements, discussions. CMES-Computer Modeling in Engineering & Sciences, 141(1), 2024.
[44] Imtiaz Parvez, Ali Rahmati, Ismail Guvenc, Arif I Sarwat, and Huaiyu Dai. A survey on low latency towards 5g: Ran, core network and caching solutions. IEEE Communications Surveys & Tutorials, 20(4):3098-3130, 2018.
[45] Adam Paszke, Sam Gross, Soumith Chintala, Gregory Chanan, Edward Yang, Zachary DeVito, Zeming Lin, Alban Desmaison, Luca Antiga, and Adam Lerer. Automatic differentiation in pytorch. 2017.
[46] Michele Polese, Leonardo Bonati, Salvatore D'oro, Stefano Basagni, and Tommaso Melodia. Understanding o-ran: Architecture, interfaces, algorithms, security, and research challenges. IEEE Communications Surveys & Tutorials, 25(2):1376-1411, 2023.
[47] Francesco Delli Priscoli, Alessandro Giuseppi, Francesco Liberati, and Antonio Pietrabissa. Traffic steering and network selection in 5g networks based on reinforcement learning. In 2020 European Control Conference (ECC), pages 595-601. IEEE, 2020.
[48] Alaa Sagheer and Mostafa Kotb. Unsupervised pretraining of a deep LSTM-based stacked autoencoder for multivariate time series forecasting problems. Scientific reports, 9(1):19038, 2019.
[49] Nisar Sanadi. How will ric leverage ai/ml to improve user experience?, December 2023.
[50] Naveen Naik Sapavath, Brian Kim, Kaushik Chowdhury, and Vijay K Shah. Experimental study of adversarial attacks on ml-based xapps in o-ran. arXiv preprint arXiv:2309.03844, 2023.
[51] Chih-Ting Shen, Yu-Yi Xiao, Yi-Wei Ma, Jiann-Liang Chen, Cheng-Mou Chiang, Shiang-Jiun Chen, and YuChuan Pan. Security threat analysis and treatment strategy for O-RAN. In 2022 24th International Conference on Advanced Communication Technology (ICACT), pages 417-422. IEEE, 2022.
[52] Seyed Ahmad Soleymani, Mohsen Eslamnejad, Hamed Alimohammadi, Ayhan Akbas, Chuan Heng Foh, and Mohammad Shojafar. Ddos detection and mitigation using d/xapp in O-RAN.
[53] Sanaz Soltani, Mohammad Shojafar, Ali Amanlou, and Rahim Tafazolli. Intelligent control in 6g open RAN: Security risk or opportunity? arXiv preprint arXiv:2405.08577, 2024.
[54] Otto T. Neutral host: how open ran and neutral host paves the way for 5g, 2021.
[55] Elham Tabassi, Kevin J Burns, Michael Hadjimichael, Andres D Molina-Markham, and Julian T Sexton. A taxonomy and terminology of adversarial machine learning. NIST IR, 2019:1-29, 2019.
[56] Muhammad Tayyab, Xavier Gelabert, and Riku Jäntti. A survey on handover management: From Ite to nr. IEEE Access, 7:118907-118930, 2019.
[57] Theodoros Tsourdinis, Nikos Makris, Thanasis Korakis, and Serge Fdida. Ai-driven network intrusion detection and resource allocation in real-world o-ran 5g networks. In Proceedings of the 30th Annual International Conference on Mobile Computing and Networking, pages 1842-1849, 2024.
[58] Vodafone. Technology and innovation open ran, 2024.
[59] Yuanyuan Wei, Julian Jang-Jaccard, Wen Xu, Fariza Sabrina, Seyit Camtepe, and Mikael Boulic. LSTM Autoencoder-based anomaly detection for indoor air quality time-series data. IEEE Sensors Journal, 23(4):3787-3800, 2023.
[60] Andrew Wooden. Freshwave pumps out 4g from all four UK operators in one unit, 2024.
[61] Bruno Missi Xavier, Merim Dzaferagic, Diarmuid Collins, Giovanni Comarela, Magnos Martinello, and Marco Ruffini. Machine learning-based early attack detection using open ran intelligent controller. arXiv preprint arXiv:2302.01864, 2023.
[62] Bruno Missi Xavier, Merim Dzaferagic, Irene Vilà, Magnos Martinello, and Marco Ruffini. Cross-domain Al for early attack detection and defense against malicious flows in o-ran. arXiv preprint arXiv:2401.09204, 2024.
[63] Huan Zhang, Hongge Chen, Chaowei Xiao, Bo Li, Mingyan Liu, Duane Boning, and Cho-Jui Hsieh. Robust deep reinforcement learning against adversarial perturbations on state observations. Advances in Neural Information Processing Systems, 33:21024-21037, 2020.
[64] Xiangming Zhu and Chunxiao Jiang. Integrated satellite-terrestrial networks toward 6g: Architectures, applications, and challenges. IEEE Internet of Things Journal, 9(1):437-461, 2021.17

## Claims

1. An Al-based method for detecting adversarial cell telemetry vulnerabilities in real time resulting from O-RAN's openness and multi-operator untrusted structure, comprising:
a) extracting relevant time-series features from the reporting cells and UEs Key Performance Indicators (KPIs);
b) training a dedicated AE model for each cell;
c) generating new enriched feature vectors that capture contextual information from both each specific cell and the entire network using compressed latent space from each AE model, concatenated with the aggregated latent spaces from all other cells;
d) training an additional AE for each cell using said new enriched feature vectors, thereby reconstructing the original features;
e) training a classifier to compare the output of the second model to the input of the first model; and
f) if the loss between said input and output exceeds a predefined threshold, classifying said input as untrusted, otherwise classifying said input as trusted.

2. A method according to claim 1, wherein the training process is an unsupervised learning process, performed using benign data to learn benign data behavior.

3. A method according to claim 1, wherein the classification provides indications whether the KPIs of an examined cell are benign or adversarial.

4. A method according to claim 1, wherein detection is based on a long short-term memory (LSTM) autoencoder (AE) architecture.

5. A method according to claim 1, further comprising generating an attack threat model, representing the vulnerabilities, in which a cell is the threat actor targeting the TS flow to obtain more UE to serve.

6. A method according to claim 1, further comprising an open-source testbed environment that allows live data collection including a closed-loop wireless network simulator connected to an OSC RIC cluster.

7. A method according to claim 5, wherein the attack is applied by an attacker by:
a) training a substitute QP model, which replicates the behavior of the target model used in the TS flow;
b) using said substitute model, to learn the model's decision boundaries and behavior;
c) identifying the minimal input perturbations that need to be added to the cell's KPIs to manipulate the QP model by analyzing the decision boundaries;
d) performing an adversarial evasion attack to generate adversarial samples;
e) reporting crafted adversarial samples, representing perturbed KPIs, to the RIC as legitimate data and storing adversarial samples in the RIC database;
f) upon detecting that UE required cell allocation, requesting a QoE prediction for the potential new target cells; and
g) predicting an artificially high QoE for the malicious cell the QP model, based on the adversarial samples, to thereby allocate UE to said malicious cell.

8. A method according to claim 1, wherein the detection is performed by:
a) extracting relevant time-series features are from the KPIs reported by cells and UE;
b) for every cell, training a dedicated AE model to learn the patterns in said time-series features;
c) for a network and the network KPI reports R, identifying a framework to reconstruct the original network reports;
d) examining the loss function score between the reconstructed report F(R) and the original report (R); and
e) if loss function score is higher than the threshold T, the classifier C will return a trusted result; otherwise, the classifier C will return an untrusted result.

9. A method according to claim 1, wherein an initial AE training is performed by:
a) training a dedicated AE for each cell, where each AE is based on an LSTM AE architecture and designed to encode every time window to a new dimensional latent space representation; and
b) decoding said time window back to the original time window, to obtain a trained LSTM AE for each cell in the network.

10. A method according to claim 1, wherein enriched AE training is performed by:
a) training a second round of AE models for each cell, where the AE models encode the enriched feature set to a new latent space using LSTM layers; and
b) training said AE models to decode and reconstruct the first feature set, thereby allowing said AE models learn to incorporate information from the entire network.

11. A method according to claim 1, further comprising classifying Network Reports by:
a) propagating the cell reports throughout the framework;
b) when cell reports reach the RIC, extracting the first feature set and encoding said first feature set by its AE, to produce the latent embedding;
c) using said latent embedding to generate the enriched feature set;
d) feeding enriched feature set into the second AEs, to reconstruct the first feature set; and
e) classifying the reports according to a predefined threshold, based on a certain policy provided by the operator.

12. An Al-based system for detecting adversarial cell telemetry vulnerabilities in real time resulting from O-RAN's openness and multi-operator untrusted structure, comprising:
a) a computerized device comprising at least one processor and associated memory, being configured to:
b) extract relevant time-series features from the reporting cells and UEs Key Performance Indicators (KPIs);
c) train a dedicated AE model for each cell;
d) generate new enriched feature vectors that capture contextual information from both each specific cell and the entire network using compressed latent space from each AE model, concatenated with the aggregated latent spaces from all other cells;
e) train an additional AE for each cell using said new enriched feature vectors, thereby reconstructing the original features;
f) train a classifier to compare the output of the second model to the input of the first model; and
g) if the loss between said input and output exceeds a predefined threshold, classify said input as untrusted, otherwise classifying said input as trusted.
